Europäisches Patentamt

European Patent Office

Office européen des brevets

(19)

(11) **EP 1 116 744 A2**

(12) # EUROPEAN PATENT APPLICATION

(43) Date of publication:
**18.07.2001 Bulletin 2001/29**

(51) Int Cl.[7]: **C08J 5/18**
// C08L23:04

(21) Application number: **00127357.2**

(22) Date of filing: **13.12.2000**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.12.1999 JP 37066999
27.12.1999 JP 37066699**

(71) Applicant: **Sumitomo Chemical Company,
Limited
Chuo-ku Osaka 541-8550 (JP)**

(72) Inventors:
• **Kuroda, Ryuma
Ibaraki-shi, Osaka (JP)**
• **Takahata, Hiroaki
Toyonaka-shi, Osaka (JP)**
• **Takagi, Yasuyuki
Ibaraki-shi, Osaka (JP)**

(74) Representative: **Kuhnen & Wacker
Patentanwaltsgesellschaft mbH,
Alois-Steinecker-Strasse 22
85354 Freising (DE)**

(54) **Easily-tearable film**

(57)  The present invention provides a film comprising a layer formed of a resin composition including (a) an olefine-based resin having a solubility parameter (SP value) of from 8.45 to 8.70 and containing therein no repeat unit derived from an aromatic vinyl compound [component (A)] and (b) a thermoplastic resin having a glass transition temperature of more than 50°C and being made up of a repeat unit different than that of component (A) [component (B)] wherein the resin composition contains from 10 to 1800 parts by weight of component (A) based on 100 parts by weight of component (B), and the like, said film showing an improved easy-tearability, especially better linear tearability.

EP 1 116 744 A2

**Description**

BACKGROUND OF THE INVENTION

Field of the Invention

The present invention relates to easily-tearable films useful as a wrapping material.

Description of the Related Art

Hitherto, as a film that can be torn in a single direction by hand, mono- or biaxially stretched polyolefin films are known (see, for example, Japanese Patent Publication No. 51-41154.) However, imparting easy-tearability to films by stretching causes a necessity of a stretching step, resulting in a high production cost and can achieve only unsatisfactory easy-tearability. Moreover, when the stretched easily-tearable film is heat-sealed, the film may shrink to form wrinkles.

Japanese Laid-Open Patent Publication No. 7-292171 discloses an easily-tearable film obtained through no stretching. This film is formed of a resin composition comprising olefine-based polymer (I) such as polypropylene and styrene-based polymer (II) in a ratio (I)/(II) of from 61/39 to 98/2 (weight ratio) and further comprising compatibilizing agent (III) such as a hydrogenated styrene-based monomer/conjugated diene copolymer rubber in a ratio of from 0.1 to 30 parts by weight based on 100 parts by weight of the total of (I) and (II), but there is a demand for the film to further improve its easy-tearability, especially linear tearability.

SUMMARY OF THE INVENTION

Under such circumstances, the object of the present invention is to provide novel easily-tearable films excellent in easy-tearability, especially in linear tearability.

The present inventors had studied hard and reached the present invention after finding that a film having a layer formed of a resin composition comprising a specific kind of thermoplastic resin and a specific olefine-based resin in a specific blend ratio can solve the aforementioned problem.

That is, the present invention provides a film comprising a layer formed of a resin composition including (a) an olefine-based resin having a solubility parameter (SP value) of from 8.45 to 8.70 and containing therein no repeat unit derived from an aromatic vinyl compound [component (A)] and (b) a thermoplastic resin having a glass transition temperature of more than 50°C and being made up of a repeat unit different than that of component (A) [component (B)] wherein the resin composition contains from 10 to 1800 parts by weight of component (A) based on 100 parts by weight of component (B).

In the above constitution, component (B) may be a styrene-based resin. Such an improved constitution results in better easy-tearability, especially better linear tearability.

Moreover, in the above constitutions, component (A) may be an ethylene-based copolymer made up of a repeat unit derived from a vinyl group-containing monomer selected from the group consisting of an unsaturated carboxylic acid, an unsaturated carboxylic ester, an unsaturated carboxylic anhydride and a vinyl saturated carboxylic acid and a repeat unit derived from ethylene. According to this improved constitution, since such a specific ethylene-based copolymer and a styrene-based resin show excellent compatibility with each other, mixing the styrene-based resin and the ethylene-based copolymer results in proper dispersion. Therefore, films are improved in their strength without the use of any compatibilizing agent and become excellent in processability. Moreover, they are remarkably improved in performances as easily-tearable films, especially in linear tearability.

In addition, in the aforementioned constitutions, the resin composition may further comprise (c) a hydrogenated styrene/conjugated diene copolymer rubber having less than 70% by weight of a styrene unit [component (C)] wherein the resin composition contains from 0.5 to 600 parts by weight of component (C) based on component (B).

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

DETAILED DESCRIPTION OF THE PREFERRED EMBODIMENTS

The film of the present invention is characterized by having a layer formed of a resin composition including (a) an olefine-based resin having a solubility parameter (SP value) of from 8.45 to 8.70 and containing therein no repeat unit derived from an aromatic vinyl compound [component (A)] and (b) a thermoplastic resin having a glass transition temperature of more than 50°C and being made up of a repeat unit different than that of component (A) [component (B)] wherein the resin composition contains from 10 to 1800 parts by weight of component (A) based on 100 parts by weight of component (B).

Component (B) is not particularly limited as long as it is a thermoplastic resin having a glass transition temperature of more than 50°C and being made up of a repeat unit different than that of the aforementioned component (A), and can be, for example, exemplified by a thermoplastic resin selected from the group including styrene-based resins, carbonate-based resins and ester-based resins or mixtures of two or more thermoplastic resins selected from the foregoing group. Among them, the use of the styrene-based resins or the ester-based resins is preferable from the view point of linear tearability, and the styrene-based resins are particularly excellent.

The "styrene-based resin" used herein is a polymer mainly made up of repeat units derived from styrene, examples of which include a styrene polymer (general purpose polystyrene, GPPS), a rubber-modified polystyrene (high-impact polystyrene, HIPS), a styrene/acrylic acid copolymer, a styrene/methacrylic acid copolymer, a styrene/acrylic ester copolymer, a styrene/methacrylic ester copolymer, a styrene/acrylonitrile copolymer, a styrene/maleic anhydride copolymer and a rubber-modified styrene/acrylonitrile copolymer. The styrene-based resin to become component (B) in the film of the present invention may be one selected from the aforementioned group or a combination of two or more resins selected from that group. The foregoing "rubber-modified polystyrene (HIPS)" is a material obtainable by the polymerization of a styrene monomer in the presence of particles of a soft component such as polybutadiene and generally contains from 5 to 25 parts by weight of such soft component particles. In the present invention, the styrene polymer or the rubber-modified polystyrene or a mixture of these polymers is preferred from the viewpoint of easy-tearability. Moreover, considering the easy-tearability, especially linear tearability, the styrene polymer is more preferred.

The "ester-based resin" used herein is a polymer produced by condensation polymerization between polybasic acid and polyhydric alcohol. Examples of the polybasic acid include aromatic dicarboxylic acids such as terephthalic acid, isophtalic acid, 2,6-naphthalene dicarboxylic acid and the like. Examples of the polyhydric alcohol include ethylene glycol, 1,4-butadiol, 2,2-dimethyltrimethylene glycol, hexamethylene glycol and the like. Any of combinations of the above polybasic acid with the above polyhydric alcohol may be selected as long as a polymer produced by condensation polymerization between the polybasic acid and the polyhydric alcohol has a glass transition temperature of more than 50°C. Among them, preferable examples include terephthalic acid/ethylene glycol copolymer, terephthalic acid/ethylene glycol/1,4-cyclohexane dimethanol tercopolymer from the viewpoint of the easy-tearability, especially linear tearability.

The resin composition constituting the film of the present invention contains, as component (A), an olefine-based resin having a solubility parameter (SP value) of from 8.45 to 8.70 and containing therein no repeat unit derived from an aromatic vinyl compound. Hereinafter, the "repeat unit derived from an aromatic vinyl compound" is referred to as an "aromatic vinyl unit." When such an olefine-based resin, that is, component (A) is present together with component (B), the film of the present invention can maintain desirable strength as a film and become a film excellent in easy-tearability, especially in linear tearability.

The solubility parameter (SP value) used in the present invention is a value that is defined by the following formula (1) proposed by Small. The detail about the SP value is given in Journal of Applied Chemistry, 3, 71-80 (1953).

$$\text{SP value} = \Sigma\, F_i/V = \rho \times \Sigma\, F_i/M \tag{1}$$

In formula (1), $F_i$ is a molar attracting force of a structural group which constitutes a molecule such as an atom, an atomic group or a bond type, V is a molar volume, $\rho$ is a density, and M is a molecular weight of a compound, or a molecular weight of one repeat unit (namely a monomer) in the case of a polymer molecule. As the $F_i$ values, those of Small disclosed in the above literature are used. Each of $\rho$, $\Sigma\, F_i$ and M of a copolymer is calculated as a sum of a product of $\rho$, $\Sigma\, F_i$ or M of a homopolymer of each monomer and a molar percentage of the respective monomer.

Preferable examples of the olefine-based resin having an SP value of from 8.45 to 8.70 and containing therein no aromatic vinyl unit include ethylene-based copolymers made up of a repeat unit derived from a vinyl group-containing monomer selected from the group consisting of an unsaturated carboxylic acid, an unsaturated carboxylic ester, an unsaturated carboxylic anhydride and a saturated carboxylic acid vinyl ester and a repeat unit derived from ethylene. Hereinafter, the "repeat unit derived from a vinyl group-containing monomer" is referred to as a "vinyl monomer unit" and the "repeat unit derived from ethylene" is referred to as an "ethylene unit." Moreover, the case where an ethylene-based copolymer has an SP value being out of the foregoing range is not very desirable because it has poor compatibility with, for example, a styrene-based resin and therefore, at the time of tearing, there occur undesirable phenomena that a tear runs with waving to the left and right relative to the tearing direction and the film tears with forming a curve.

Specific examples of such ethylene-based copolymer include an ethylene/unsaturated carboxylic acid copolymer, an ethylene/unsaturated carboxylic acid ester copolymer, an ethylene/unsaturated carboxylic anhydride copolymer, an ethylene/vinyl saturated carboxylate copolymer, an ethylene/unsaturated carboxylic ester/vinyl saturated carboxylate terpolymer and copolymers made up of an ethylene unit and two or more kinds of unsaturated carboxylic ester units.

The unsaturated carboxylic acid can be exemplified by acrylic acid and methacrylic acid. The unsaturated carboxylic ester can be exemplified by ethyl acrylate, methyl acrylate, 2-ethylhexyl acrylate, stearyl acrylate, glycidyl acrylate, methyl methacrylate, ethyl methacrylate, 2-ethylhexyl methacrylate, stearyl methacrylate and glycidyl methacrylate. The unsaturated carboxylic anhydride may, for example, be maleic anhydride.

Preferable specific examples of the ethylene-based copolymer include an ethylene/acrylic acid copolymer, an ethylene/methacrylic acid copolymer, an ethylene/methyl acrylate copolymer, an ethylene/ethyl acrylate copolymer, an ethylene/methyl methacrylate copolymer, an ethylene/ethyl methacrylate copolymer, an ethylene/vinyl acetate copolymer, an ethylene/methyl acrylate/glycidyl methacrylate copolymer, an ethylene/methyl methacrylate/glycidyl methacrylate copolymer, an ethylene/vinyl acetate/glycidyl methacrylate copolymer and an ethylene/maleic anhydride copolymer.

Although the ratio of the vinyl monomer unit to the ethylene unit in the ethylene-based copolymer may be set so that the SP value fall within the range of from 8.45 to 8.70, the content of the vinyl monomer unit is preferably from 5 to 60% by weight.

The ethylene-based copolymers may be any type of a random copolymer, a block copolymer and an alternate copolymer.

Of the ethylene-based copolymers, the ethylene/methyl methacrylate copolymer, the ethylene/methyl acrylate copolymer and the ethylene/vinyl acetate copolymer are preferable from the viewpoint of the linear tearability of films. Especially, ethylene/methyl methacrylate copolymers or ethylene/methyl acrylate copolymers having the content of a methyl methacrylate or methyl acrylate unit of from 15 to 50% by weight are preferable. In particular, ethylene/methyl methacrylate copolymers or ethylene/methyl acrylate copolymers having the content of a methyl methacrylate or methyl acrylate unit of from 20 to 45% by weight are preferable because easily-tearable films have further improved linear tearability.

If olefine-based resins having a repeat unit derived from an aromatic vinyl compound in its molecule are used in place of the aforementioned olefine-based resin, that is, component (A), the films have unsatisfactory linear tearability. The aromatic vinyl compound is exemplified by styrene, styrenes substituted with an alkyl group on their $\alpha$-position such as $\alpha$-methylstyrene, and styrenes substituted with an alkyl group on their aromatic ring such as p-methylstyrene.

From the viewpoint of linear tearability, the content of component (A) in the resin composition constituting the film of the present invention is from 10 to 1800 parts by weight, preferably from 20 to 700 parts by weight and particularly preferably from 50 to 500 parts by weight based on 100 parts by weight of component (B).

When being out of those ranges, the factor for inhibiting easy-tearability of component (A) forming a continuous phase (elongation in tearing) increases, resulting in the loss of easy-tearability or the decrease of softness of films, resulting in the difficulty in the use of films as a wrapping material.

The resin composition constituting the film of the present invention may contain resins other than components (A) and (B) unless easy-tearability, especially linear tearability of films is terribly damaged. For example, component (A) is generally soft and therefore the use of component (A) in an amount of from 50 to 1800 parts by weight based on component (B), especially on styrene-based resin, results in the fact that although the film of the present invention shows satisfactory linear tearability when used as a wrapping film, the film has a so-called "weak rigidity" and it may become difficult to be used in wrapping machines or the like. To eliminate this problem, the resin composition may contain olefine-based resins other than component (A). In such a case, the amount of the olefine-based resin to be additionally blended is preferably equal parts by weight to that of component (A) based on 100 parts by weight of component (B), especially on the styrene-based resin. Furthermore, more specific examples of the amount of the olefine-based resin to be additionally blended is from 20 to 700 parts by weight, particularly preferably from 50 to 300 parts by weight, based on compound (B). The fact that the content of the additional olefine-based resin is in that range is preferable from the viewpoint of easy-tearability, expecially linear tearability. Examples of such olefine-based resins to be additionally blended include ethylene-based resins and propylene-based resins. More specific examples include polyethylenes such as low density polyethylene (LDPE) and high density polyethylene, ethylene/$\alpha$-olefin copolymers (so-called linear low density ethylene: LLDPE) such as an ethylene/butene-1 copolymer and an ethylene/hexane-1 copolymer, polypropylene, propylene-based polymers such as a propylene/$\alpha$-olefin block copolymer and a propylene/$\alpha$-olefin random copolymer, and mixtures of two or more of them.

Of the above additional olefine-based resins, preferable ethylene-based resin is polyethylene, ethylene/α-olefin copolymers or mixtures of these polymers having a melt flow rate (MFR) of from not more than 15g/10minutes, more preferably from 0.2 to 10 g/10 minutes, measured under the conditions of at a temperature of 190°C and at a load of 2.16 kg in accordance with JIS K7210. If an ethylene-based resin has an MFR falling within the above range, the MFR is near to those of styrene-based resins. For this reason, when a styrene-based resin is used as component (B), films to be produced become satisfactory in easy-tearability, especially in linear tearability. It is preferable from the viewpoint of the aforementioned rigidity-improving effect that an ethylene-based resin has a density of not less than 0.918 because the effect is highly obtained. The α-olefin in the ethylene/α-olefin copolymer may be exemplified by α-olefins having from 3 to 10 carbon atoms such as propylene, butene-1, hexane-1, 4-methylpentene-1, heptene-1, octene-1 and decene-1.

Moreover, a preferable propylene-based resin is polypropylene, a propylene/α-olefin block copolymer, a propylene/α-olefin random copolymer or mixtures thereof having an MFR of from not more than 15g/10 minutes, more preferably from 0.2 to 10 g/10 minutes, measured under the conditions of at a temperature of 230°C and at a load of 2.16 kg in accordance with JIS K7210. If a propylene-based resin has an MFR falling within the above range, the MFR is near to those of styrene-based resins. For this reason, when a styrene-based resin is used as component (B), films to be produced become satisfactory in easy-tearability, especially in linear tearability. The α-olefin contained in the propylene/α-olefin block copolymer and the propylene/α-olefin random copolymer may be exemplified by ethylene and butene-1.

The resin composition constituting the film of the present invention may contain a lubricant, an anti-blocking agent, an antistatic agent, an antioxidant, a heat stabilizer, an ultraviolet absorber, a colorant, an antibacterial agent, an anti-clouding agent, a plasticizer and the like depending upon the performance that the film is required to have.

In addition, the resin composition constituting the film of the present invention may include a hydrogenated styrene/conjugated diene copolymer rubber having less than 70% by weight of a styrene unit [component (C)] and also include component (C) in an amount of from 0.5 to 600 parts by weight, preferably from 5 to 600 parts by weight, more preferably from 5 to 300 parts by weight, based on component (B) so that the film will have further improved flocculation-strength thereof. Moreover, the content of such a styrene/conjugated diene copolymer rubber, that is, component (C) is, for example, preferably from 0.5 to 20 parts by weight and more preferably from 2 to 10 parts by weight based on the whole weight of the resin composition. Preferable specific examples of the styrene/conjugated copolymer rubber include hydrogenated products of styrene/isoprene block copolymer rubber and hydrogenated styrene/butadiene block copolymer both having the styrene unit content of from 30 to 70 parts by weight. Particularly, the hydrogenated products of styrene/butadiene block copolymer are preferred from the view point of linear tearability.

The term "hydrogenated" used herein means the hydrogenation that has been performed within a range where the effect of the present invention is not damaged. Although a hydrogenation rate of the styrene/conjugated diene copolymer rubber varies depending, for example, on the composition and constituting ratio of the resin composition, it may be from about 50 to 100%, preferably from about 70 to 100%, and particularly preferably about 85 to 100%, based on the whole conjugated diene.

The film of the present invention may be a film which is made up of a single layer as an entire structure, that is, a single layer film composed of the aforementioned resin composition. Alternatively, it may also be a film which is made up of plural layers as an entire structure, that is, a multi-layer film having a layer of the aforementioned resin composition as at least one surface layer unless the easy-tearability, particularly linear tearability is terribly damaged. For instance, multi-layer films may have a further layer other than that of the aforementioned resin composition, such as that formed in conventional wrapping material, for example, a sealant layer, a heat-resistant protective layer, a gas barrier layer, a print layer and an adhesive layer. The layer other than that of the aforementioned resin composition may also be those made up of resin, paper, metal foil or the like.

As the sealant layer, for example, a layer of polyethylene-based resin, an easily-tearable resin layer may be applied. As the heat-resistant protective layer, stretched films of commercially available polyamide-based, polyester-based or polypropylene-based resin may be applied. As the gas barrier film, gas barrier films made up of various kinds of materials formed by coating method may be applied.

Examples of the multi-layer film having a layer of the aforementioned resin composition as at least one surface layer include:

(i) A multi-layer film having a film, which is made up of a single layer as an entire structure, as at least one surface layer wherein the film is that comprising a layer formed of the aforementioned resin composition including the aforementioned components (A) and (B) wherein the resin composition contains from 10 to 1800 parts by weight of component (A) based on 100 parts by weight of component (B);

(ii) A multi-layer film having a film which is made up of a single layer as an entire structure, as at least one surface layer wherein the film is that comprising a layer formed of the aforementioned resin composition including the aforementioned components (A), (B) and (C) wherein the resin composition contains from 10 to 1800 parts by weight of component (A) and from 0.5 to 600 parts by weight of component (C), based on 100 parts by weight of component (B); and

(iii) A multi-layer film having the single-layer film of the above item (i) as one surface layer and the single-layer film of the above item (ii) as another surface layer or one inner layer. As for the multi-layer film of item (iii), one of its preferred embodiments is that the ratio of the thickness of the single-layer film of item (ii) to the thickness of the single-layer film of item (i) is from 1/0.2 to 1/5.

The thickness of the film of the present invention is not particularly limited, but is preferably set to approximately from 20 to 200 $\mu$m from the viewpoint of tear strength.

The film of the present invention may be produced, for example, by the inflation forming method and the T-die cast forming method. In the production of multi-layer films having two or more layers, such films may be produced by the coextrusion inflation forming method, the coextrusion T-die cast forming method or the like. Moreover, it may also be produced by the lamination of films prepared using a known technique such as dry lamination. Furthermore, it may also be produced by combining the foregoing methods. When a print layer is formed, it may be formed by a known method such as gravure printing. When a gas barrier layer is formed, it may be formed by a coating method as described above.

The film of the present invention may be used in the form of various wrapping materials. For example, the film of the present invention may be processed into bag-like containers such as a three-side sealed bag, a four-side sealed bag and a standing pouch. Moreover, the film of the present invention may be used as a lid for containers like cups or boxes made of plastics, paper, metal (aluminum foil or the like) and glass. Such a lid may be produced by a method in which the lid is formed by a processing method with a method in which, for example, a substrate composed of plastics, paper, metal (aluminum foil or the like) or the like and the film of the present invention are cut into a desired shape.

The multi-layer film may be finished into a lid in a state where it has been stuck to a container by being stuck to a flange portion of a container before being punched, and then being punched.

In the case where the film of the present invention is used as a lid for containers, it is a matter of course that both of an appropriate sealability of the film to containers and an appropriate easy-peelability of the film to containers are needed. Accordingly, a balance between sealability of the film to containers and easy-peelability of the film to containers may been adjusted to an appropriate one. For example, when containers are made up of polypropylene resin, the film of the present invention preferably contains ethylene/$\alpha$-olefin copolymer which is linear low density polyethylene. Preferable examples of the above ethylene/$\alpha$-olefin copolymer may be that having a melt flow rate (MFR) of not more than 15g/10 minutes, measured under the conditions of at a temperature of 190°C and at a load of 2.16kg in accordance with JIS K7210, a density of from 0.89 to 0.924 g/cm$^3$, and an amount of from 50 to 300 parts by weight based on 100 parts by weight of component (B).

The present invention provides a film which is excellent in easy-tearability, especially in linear tearability and which is useful as wrapping material.

An easily-tearable lid using the film of the present invention is used by being sealed to a flange portion of a container such as a plastic container having a recessed portion. At the time of opening the sealed container, the content can be easily taken out by either tearing or peeling a part of the lid. Moreover, a container using the film of the present invention can be opened by either peeling the sealed part or easily tearing a part of the container. Such a container may not cause "crotch splitting" phenomenon.

Examples

The present invention will be described based on the following examples, but is not limited to the examples. The method for evaluating films in Examples 1 and 2 is as follows:

(1) <Tear strength>
As for the direction (MD) in which a film flew in its production and the direction (TD) perpendicular to the MD, tear strength of a film was determined in accordance with ASTM D1922-67 (the Elemendorf test.) It is preferable that both values are not greater than 20 kg/cm.
(2) <Linear tearability>
On one side of a film were formed two notches in parallel to each other at an interval of 40 mm. The film was torn over 200 mm with being held at the center between the notches with hand. Measuring the width L (mm) of the torn film along the line running away by 200 mm in the tear direction from the aforementioned side of the film, a value of 40-L (mm) was calculated. The tests were conducted while setting the direction (MD) in which the film flew in its production and the direction (TD) perpendicular to the MD direction to be tear directions. In the case where the 40-L value is not less than -4 and not greater than 4 for both MD and TD, the film is superior in linear tearability. In contrast, in the case where the 40-L value is less than -4 or greater than 4, the film is inferior in linear tearability.

Example 1

Using a T-die cast forming machine, 40 parts by weight of a styrene polymer having a glass transition temperature of more than 50°C (trade name: Nihon polysti G590; manufactured by Nihon Polystyrene Co., Ltd.; hereinafter, it is referred to as GPPS), 35 parts by weight of ethylene/methyl methacrylate (trade name: Acryft WM403; manufactured by Sumitomo Chemical Co., Ltd.; SP value = 8.50; 38 weight % methyl methacrylate, hereinafter, it is referred to as EMMA), and 35 parts by weight of low density plyethylene (trade name: Sumikathene L211; manufactured by Sumitomo Chemical Co., Ltd.; MFR (190°C, load: 2.16 kg) = 2 g/10 minutes; SP value = 8.78; hereinafter, it is referred to as LDPE) were kneaded at 230°C. A 100-μm thick film was produced by extruding the kneaded mixture at a die temperature of 230°C. The results are shown in Table 1.

Example 2

Using a T-die cast forming machine, 30 parts by weight of GPPS, 35 parts by weight of EMMA, 35 parts by of LDPE and 10 parts by weight of a hydrogenated product of a styrene/butadiene block copolymer rubber (trade name: Septon 8007; manufactured by Kuraray Co., Ltd.; hereinafter, it is referred to as SEBS) were kneaded. A 100-μm thick film was produced by extruding the kneaded mixture at a die temperature of 230°C. The results are shown in Table 1.

Comparative Example 1

Using a T-die cast forming machine, 30 parts by weight of GPPS, 35 parts by of LDPE and 10 parts by weight of a hydrogenated product of a styrene/isoprene block copolymer rubber (trade name: Septon 2104; manufactured by Kuraray Co., Ltd.; hereinafter, it is referred to as SEPS) were kneaded. A 100-μm thick film was produced by extruding the kneaded mixture at a die temperature of 230°C. The results are shown in Table 1.

Table 1

| | | Example 1 | Example 2 | Comparative Example 1 |
|---|---|---|---|---|
| Resin Composition | GPPS | 40 | 30 | 30 |
| | EMMA | 35 | 35 | none |
| | LDPE | 35 | 35 | 35 |
| | SEBS | none | 10 | none |
| | SEPS | none | none | 10 |
| Linear Tearability (mm) Linear Tearability (mm) | | 1.6 (MD) 3.4(TD) | 2.5(MD) 2.0(TD) | 1.2(MD) 8.8(MD) |
| Tear Strength (kg/cm) | | 1.3(MD) 6.0(TD) | 2.7(MD) 7.0(TD) | 3.5(MD) 7.3(TD) |

Example 3

Using a T-die cast forming machine, a layer of a resin composition (X) obtained by blending 30 parts by weight of GPPS, 60 parts by of LDPE and 10 parts by weight of SEBS, and a layer of a resin composition (Y) obtained by blending 40 parts by weight of rubber-modified polystyrene (Nippon Polysti H550; manufactured by Nippon Polystyrene Co., Ltd.; hereinafter, it is referred to as HIPS ) and 60 parts by weight of EMMA were melt-extruded under the conditions of at a cylinder temperature of 230°C and die temperature of 230°C and under the conditions where thickness of the former and latter layers be former/latter = 22 μm/8 μm, producing a film. In addition, the method for measuring peel strength is as follows. The results are shown in Table 2.

<Peel strength>

An easily-tearable film produced was dry-laminated to a biaxially stretched polyester film (PET: Toyobo Ester film E5102 manufactured by Toyobo Co., Ltd.; thickness = 12 μm) with an adhesive (a product obtained by diluting Takerack A-515/Takenate A-50 = 10/1 (weight ratio) with ethyl acetate so that the solid content become 15 wt%; manufactured by Takeda Chemical Industries Ltd.) and aged at 40°C for 48hours. On a HIPS sheet (300 μm) was heat-

sealed a surface for sealing of the easily-tearable film under the conditions of at two standard temperatures of 160°C and 200°C, at a pressure of 3 kg/cm$^2$, for 1 second, and then the sealed film was cut out into a 15-mm wide rectangle. The sample was peeled at a peel rate of 300 mm/minute and at a peel angle of 180 degrees using an Autograph AGS-500 manufactured by Shimadzu Corp. and a peel load at that time was determined.

Comparative Example 2

Operations were conducted in the same manner as Example 3 except changing the layer of the resin composition (Y) to a layer of LDPE. The results are shown in Table 2.

Comparative Example 3

Using a T-die cast forming machine, a resin composition (X) obtained by blending 30 parts by weight of GPPS, 60 parts by of LDPE and 10 parts by weight of SEBS was melt-extruded under the conditions of at a cylinder temperature of 230°C and die temperature of 230°C and under the conditions where thickness of the film be 50 μm. Since no sealant layer was formed, peel strength was not measured but other measurements were conducted in the same manner as Example 3. The results are shown in Table 2.

Example 4

Using a T-die cast forming machine, a resin composition obtained by blending 40 parts by weight of HIPS and 60 parts by of EMMA was melt-extruded under the conditions of at a cylinder temperature of 230°C and die temperature of 230°C and under the conditions where thickness of the film be 50 μm. The results are shown in Table 2.

Table 2

| | | Example 3 | Comparative Example 2 | Comparative Example 3 | Example 4 |
|---|---|---|---|---|---|
| Resin Composition (X) | GPPS | 30 | 30 | 30 | none |
| | LDPE | 60 | 60 | 60 | none |
| | SEPS | 10 | 10 | 10 | none |
| Resin Composition (Y) | HLPS | 40 | none | none | 40 |
| | EMMA | 60 | none | none | 60 |
| | LDPE | none | 100 | none | none |
| Linear Tearability (mm) | | 2.0(TD) | 8.3(TD) | 8.8(TD) | 4.0²⁾(TD) |
| Tear Strength (kg/cm) | | 2.1(MD) | 4.6(MD) | 6.0(MD) | 3.3(MD) |
| Peel Strength (kg/15 mm) | 160°C | 0.52 | Could not peel | | |
| | 200°C | 0.79 | Could not peel | | |

1)   Hydrogenated product of a styrene/butadiene block copolymer

2)   A little wave of tear was observed.

Example 5

Using a T-die cast forming machine, 100 parts by weight of HIPS, 375 parts by weight of EMMA and 138 parts by weight of ethylene/hexene-1 copolymer which is linear low density polyethylene (trade name: Sumikathene-E FV402; manufactured by Sumitomo Chemical Co., Ltd.; MFR (190°C, load: 2.16 kg) = 4 g/10 minutes, it is referred to as LLDPE FV402) were mixed. 100 parts by weight of the mixture, 0.4 parts by weight of higher fatty acid amide and 1.5 parts by weight of beads of methyl polymethacrylate were added into an co-revolutional direction double screw extruder and then kneaded at a cylinder temperature of 190°C to obtain pellets of resin composition (A). Further, using a T-die cast forming machine (for 3 kinds and 3 layers) manufactured by Chugai tech Co., Ltd., the resin composition (A), ethylene/hexene-1 copolymer which is linear low density polyethylene (trade name: Sumikathene-E FV405; manufactured by Sumitomo Chemical Co., Ltd., it is referred to as LLDPE FV405) and ethylene/hexene-1 copolymer which is linear low density polyethylene (trade name: Sumikathene- α CS8051; manufactured by Sumitomo Chemical Co., Ltd., it is referred to as LLDPE CS8051) were melt-extruded under the conditions of at a cylinder temperature of 230°C and die temperature of 230°C and under the conditions where thickness of the film be composed of the resin composition (A)/LLDPE FV405/LLDPE CS8051=20/10/10 (μm) to obtain a film. The obtained film showed desirable properties (i.e. easy-tearability, easy-peelability, sealability, etc.) for a lid for containers.

In addition, the method for measuring peel strength in this example is as follows.

The film obtained above was dry-laminated using a Multi Purpose Coater manufactured by Yasui-Seiki Co., Ltd., according to a coronatreatment method (at the condition of not less than 42 dyne/cm), to a biaxially stretched polyester film (PET: Toyobo Ester film E5102 manufactured by Toyobo Co., Ltd.; thickness = 12 μm, width=250mm) with an adhesive (a product obtained by diluting Takerack A-515 (Aliphatic ester-based adhesive agent) /Takenate A-50 (hardening agent) = 10/1 (weight ratio) with ethyl acetate so that the solid content become 18 wt%; manufactured by Takeda Chemical Industries Ltd.) and aged at 40°C for 48hours. On a HIPS sheet (600 μm) or a polypropylene sheet (500 μm) (trade name: Noblen FS2011D; manufactured by Sumitomo Chemical Co., Ltd., it is referred to as PP) was heat-sealed using a Heat Seal Tester manufactured by Tester Industry Co., Ltd. a surface for sealing of the laminate obtained above (i.e. surface at the side of the film of the present invention) under the conditions of at various temperatures of from 120°C to 200°C, at a pressure of 3 kg/cm$^2$, for 1 second, with 20 mm width, and then the heat-sealed film was cut out into a 15-mm wide rectangle. The sample was peeled at a peel rate of 300 mm/minute and at a peel angle of 180 degrees using an Autograph AGS-500 manufactured by Shimadzu Corp. and a peel load at that time was determined as peel strength (kg/15 mm-width).

The results are shown in Table 3.

Table 3

| | | Peel Strength (kg/15 mm-width) | |
|---|---|---|---|
| Attached body | | HIPS | PP |
| Seal Temperature (°C) | 120 | 0.59 | 0.04 |
| | 140 | 0.79 | 0.27 |
| | 160 | 0.86 | 0.57 |
| | 180 | 0.96 | 0.90 |
| | 200 | 1.14 | 1.04 |

## Claims

1. A film comprising a layer formed of a resin composition including (a) an olefine-based resin having a solubility parameter (SP value) of from 8.45 to 8.70 and containing therein no repeat unit derived from an aromatic vinyl compound [component (A)] and (b) a thermoplastic resin having a glass transition temperature of more than 50°C and being made up of a repeat unit different than that of component (A) [component (B)] wherein the resin composition contains from 10 to 1800 parts by weight of component (A) based on 100 parts by weight of component (B).

2. The film according to claim 1 wherein component (B) is a styrene-based resin.

3. The film according to claim 1 or 2 wherein component (A) is an ethylene-based copolymer made up of a repeat unit derived from a vinyl group-containing monomer selected from the group consisting of an unsaturated carboxylic acid, an unsaturated carboxylic ester, an unsaturated carboxylic anhydride and vinyl saturated carboxylic acid and a repeat unit derived from ethylene.

4. The film according to claim 1 wherein the resin composition further including (c) a hydrogenated styrene/conjugated diene copolymer rubber having less than 70% by weight of a styrene unit [component (C)] wherein the resin composition contains from 0.5 to 600 parts by weight of component (C) based on component (B).

5. The film according to claim 2 wherein the resin composition further including (c) a hydrogenated styrene/conjugated diene copolymer rubber having less than 70% by weight of a styrene unit [component (C)] wherein the resin composition contains from 0.5 to 600 parts by weight of component (C) based on component (B).

6. The film according to claim 1 which is made up of a single layer as an entire structure.

7. The film according to claim 2 which is made up of a single layer as an entire structure.

8. The film according to claim 4 which is made up of a single layer as an entire structure.

9. The film according to claim 5 which is made up of a single layer as an entire structure.

10. A multi-layer film having the film of claim 6, 7, 8 or 9 as at least one surface layer.

11. A multi-layer film having the film of claim 6 or 7 as one surface layer and the film of claim 8 or 9 as another surface layer or one inner layer.

12. The multi-layer film according to claim 11 wherein a ratio of the thickness of the film of claim 8 or 9 to that of the film of claim 6 or 7 is from 1/0.2 to 1/5.